# EUROPEAN PATENT SPECIFICATION

(11) **EP 4 491 795 B1**
(45) Date of publication and mention of the grant of the patent: **21.10.2026**
(21) Application number: 24216229.5
(22) Date of filing: 12.08.2022
(51) Int. Cl.: D21G 9/00, D21F 7/06

(54) **A RING-SHAPED STRAIN MEASURING DEVICE**
EIN RINGFÖRMIGES DEHNUNGSMESSGERÄT
UN APPAREIL DE MESURE DE CONTRAINTE EN FORME D'ANNEAU

(30) Priority: 17.08.2021 FI 20215865
(43) Date of publication of application: 15.01.2025
(62) Document number(s) of the earlier application(s) in accordance with Art. 76 EPC: 22757309.4 / 4 388 154
(73) Proprietor: Etteplan Oyj, 02150 Espoo (FI)
(72) Inventor: PÖLLÄNEN, Ilkka, 45360 Valkeala (FI)
(74) Representative: Boco IP Oy Ab

(56) References cited:
- WO-A1-99/20836
- DE-A1- 3 609 623
- DE-C1- 4 430 503
- US-B2- 6 484 593
- PUBLISHER : HOTTINGER ET AL: "Karl Hoffmann An Introduction to Measurements using Strain Gages", 1 January 1989 (1989-01-01), pages 1 - 255, XP055119007, Retrieved from the Internet <URL:http://www.hbm.com/fileadmin/mediapool/techarticles/hoffmannbook/Hoffmann-book_EN.pdf> [retrieved on 20140520]

## Description

The present invention relates to a method, and an apparatus related to strain measuring devices. More particularly, the present invention relates to a strain measuring device suitable at least for estimating operation of an industrial roller, such as a suction roll, and/or a felt of a board or paper machine.

### Background

Suction rolls are used in paper and board machines to remove water from fiber web, such as cellulose pulp web. A typical paper or board machine is equipped with multiple suction rolls in its forming and press sections. Suction rolls vary in size, rotation speed and frequency, and loading vary by application. Though similar designs and constructions, suction rolls are also used to perform several different functions on paper and cardboard machines. Besides dewatering the fiber web, they transfer the fiber web, improve dewatering in a press nip, dewater a carrier or felt, stabilize the fiber web, or pull steam into the fiber web. Suction roll shells are typically constructed of metal, such as bronze or stainless steel, and have through drilled holes, which supply vacuum to the roll's surface. A suction roll has one or more suction boxes or vacuum boxes. Suction roll has a head and journal at each end. The roll shell is typically covered by a cover material, for example rubber or polyurethane.

When a suction roll is used for removing water from the fiber web, outer surface of the suction roll contacts a carrier, often referred to as a felt, forming a sectorial area in which dewatering is performed. The felt is water permeable. Suction is caused by creating a low pressure inside the suction roll by the suction box or vacuum box, which causes the water in the fiber web to be sucked through the felt inside the suction roll, wherefrom the water can be returned back to the process.

A strain gage is a passive transducer that converts a mechanical elongation or displacement produced due to a force into its corresponding change in resistance R, inductance L, or capacitance C. A strain gage is basically used to measure the strain in a work piece. A half-bridge strain gage configuration has two active strain-gage elements. Half-bridge strain gages are used for implementing precision force transducers. A full-bridge strain gage configuration has four active strain gage elements.

A reliable device is needed to estimate operation of the suction roll and the felt so that operation thereof can be adjusted, thus ensuring good quality of the product.

### Description of the related art

Patent DE3609623 discloses a device for measuring web tension of a material web using strain gages arranged on a bending beam arranged diagonally between a base plate and a support plate for bearing blocks of a measuring roller.

Utility model FI6399 discloses a roller to monitor tension of a blanket/web using a distance sensor.

Patent application WO2014020049 discloses a method for measuring pressure profile of a paper or board machine using a roller equipped with fiber-optic sensors.

US6484593 B2 discloses load sensor comprising an annular gauge ring with annular inner ring portion and annular outer ring portion and strainable beam members interconnecting the ring portions.

### Summary

An object is to provide a device so as to solve the problem of monitoring operation of a roller and/or tension of a felt or web associated with the roller. The objects of the present invention are achieved with a ring-shaped strain measuring device according to the claim 1. The objects of the present invention are further achieved with an apparatus according to the claim 13.

The preferred embodiments of the invention are disclosed in the dependent claims.

According to an example, a method for estimating operation of an industrial roller and/or a felt of a board or paper machine is provided. The industrial roller is supported to a frame of the board or paper machine by support structures assembled at each end of the industrial roller and provided with bearings. The industrial roller is rotated about its rotation axis, aligned with the longitudinal axis of the industrial roller, by movement of the felt contacting a sectoral contact area on the outer surface of the industrial roller. The support structures are fastened to the to the frame by a plurality of fastening means. Two or more of said fastening means are or are in mechanical contact with strain measuring devices, each of said strain measuring devices comprising comprising electrical connections to electrical circuitry for providing an electrical signal representing strain on the respective strain measuring device. The method comprises obtaining samples of electrical signals provided by said electrical circuitries during operation of the paper or board machine, determining support reactions of the industrial roller on basis of said samples, and estimating operation of the industrial roller and/or the felt based on said determined support reactions.

According to an example, longitudinal axes of said fastening means are perpendicular to the rotation axis of the industrial roller.

According to an example, the method comprises obtaining said samples of the electrical signals at least ten times during each full rotation of the industrial roller, and/or adjusting the sampling frequency based on the rotation rate of the industrial roller and/or on movement speed of the felt.

According to an example, said estimation of the operation of the industrial roller and/or felt comprises determining distribution and evenness of tension of the felt along the longitudinal axis of the industrial roller, and/or determining rotation speed or frequency of the industrial roller in comparison to movement speed of the felt, and/or detecting changes in rotation speed or frequency of the industrial roller and/or the felt.

According to some embodiments, the strain measuring device is a ring-shaped strain measuring device comprising four strain gages configured to measure strain and electrical connections of the four strain gages to form a bridge circuitry for providing the electrical signal, and the method comprises fastening the support structures to the frame by a plurality of fastening means. Two or more of said fastening means further fasten respective ring-shaped strain measuring devices in washer-like manner such that a head of each one of the two or more fastening means holds the respective ring-shaped strain measuring device against the support structure.

According to an embodiment, the ring-shaped strain measuring device comprises an inner ring made of metal, an outer ring made of a synthetic polymer, and a filling within the space between the inner ring and the outer ring, the filling comprising elastic material, such as polyurethane resin, and wherein the four strain gages are disposed on the outer face of the inner ring.

According to some embodiments, the four strain gages are fixed on the outer face of the inner ring by bonding, and/or the four strain gages are arranged pairwise on two opposite sides of the inner ring, and/or each pair of strain gages is arranged in a cross-like arrangement with 90-degree orientation difference, and/or when the ring-shaped strain measuring means is in use, two of the strain gages are parallel with longitudinal dimension of the fastening means fastening the ring-shaped strain measuring means to the frame, and two of the strain gages are perpendicular to the longitudinal dimension of the fastening means.

According to an example, the industrial roller is a suction roll, and the support reactions are used for determining time, amount and/or effect of pick-up of a suction force in the operation of the suction roll.

According to an example, the method comprises automatically adjusting operation of the industrial roller and/or the felt based on said operation estimation.

According to an example, an apparatus for estimating operation of an industrial roller and/or a felt of a board or paper machine is provided. The industrial roller is supported to a frame of the board or paper machine by support structures assembled at each end of the industrial roller and provided with bearings. The industrial roller is rotated about its rotation axis, aligned with the longitudinal axis of the industrial roller, by movement of the felt contacting a sectoral contact area on the outer surface of the industrial roller. Support structures are fastened to the frame by a plurality of fastening means. Two or more of said fastening means are or are in mechanical contact with respective strain measuring devices, each of said strain measuring devices comprising electrical connections to electrical circuitry for providing an electrical signal representing strain on the respective strain measuring device. The apparatus comprises a sampling module configured to obtain samples of electrical signals provided by said electrical circuitries during operation of the paper or board machine, the electrical signal representing strain on the respective strain measuring device. The apparatus comprises a support reaction determining module configured to determine support reactions of the industrial roller on basis of said samples. The apparatus comprises at least one operation estimation module configured to estimate operation of the industrial roller and/or the felt based on said support reactions.

The apparatus comprises a sampling module configured to obtain samples of electrical signals provided by said electrical circuitries, the electrical signals representing strain on each of the plurality of strain measuring devices during operation of the paper or board machine. The apparatus comprises a support reaction determining module configured to determine support reactions of the industrial roller on basis of said samples, and at least one operation estimation module configured to estimate operation of the industrial roller and/or the felt based on said support reactions.

According to an example, longitudinal axes of said fastening means are perpendicular to the rotation axis of the industrial roller.

According to an example, the sampling module is configured to obtain said samples of the electrical signals at least ten times during each full rotation of the industrial roller, and/or wherein the sampling frequency is adjustable in dependence on the rotation rate of the industrial roller and/or on movement speed of the felt.

According to an example, said at least one operation estimation module is configured to determine distribution and evenness of tension of the felt along the longitudinal axis of the industrial roller, and/or to determine rotation speed or frequency of the industrial roller in comparison to movement speed of the felt, and/or to detect changes in rotation speed or frequency of the industrial roller and/or the felt.

According to an embodiment, the strain measuring device is a ring-shaped strain measuring device comprising four strain gages configured to measure strain and electrical connections of the four strain gages to form a bridge circuitry for providing the electrical signal. Each ring-shaped strain measuring device is configured to be fastened in washer-like manner against the support structure by a head of a respective fastening means used for fastening the support structure to the frame.

According to some embodiments, the ring-shaped strain measuring device comprises an inner ring made of metal, an outer ring made of a synthetic polymer, and a filling within the space between the inner ring and the outer ring, the filling comprising elastic material, such as polyurethane resin, and wherein the four strain gages are disposed on the outer face of the inner ring.

According to some embodiments, the four strain gages are fixed on the outer face of the inner ring by bonding, and/or the four strain gages are arranged pairwise on two opposite sides of the inner ring, and/or each pair of strain gages is arranged in a cross-like arrangement with 90-degree orientation difference, and/or when the ring-shaped strain measuring means is assembled for use, two of the strain gages are parallel with longitudinal dimension of the fastening means fastening the ring-shaped strain measuring means to the frame, and two of the strain gages are perpendicular to the longitudinal dimension of the fastening means. gage

According to an example, the industrial roller is a suction roll.

According to an example, said at least one operation estimation module is configured to determine time, amount and/or effect of pick-up of a suction force in the operation of the suction roll.

According to an example, the apparatus comprises an alarm device for providing an alarm and/or a control output for providing a control signal when an operation estimation module determines that the industrial roller and/or the felt does not operate properly, and/or at least one output providing at least one signal indicating a determined operation status of the industrial roller for a board or paper machine control apparatus configured to adjust operation parameters of the board or paper machine based at least on the signal.

According to an example, a paper or board machine is provided that comprises apparatus according to any one of the above examples and embodiments.

The present invention is based on the idea of obtaining information concerning support reactions of the industrial roller by strain measuring means comprised in or in mechanical contact with fastening means used for fastening support structures of the industrial roll to the frame of the machine and using the measured support reactions to estimate whether the industrial roller operates as intended.

The examples described disclose the advantage that based on the measured support reactions, it is possible to determine several parameters of the industrial roller and/or the felt and to predict future problems thereof. Detectable parameters comprise tension of the felt at several points along its lateral dimension. Also wear of bearings and risk of failure of bearings of the industrial roller caused by wear of the bearings can be detected for predicting need for maintenance. Various characteristics of operation of the industrial roller can be determined during the operation by detecting deviations in forces and change in measured frequencies. Suction force of a suction roll can be adjusted based on measured facts. Bolts as fastening means and carriers of sensing elements are robust and tolerate overloading quite well. Separate sensing elements fixed in place by bolts are more robust to handle. Both types of strain measurement devices are relatively easy to manufacture, but it has been found that using strain measuring devices fixed in place by bolts are more practical in use. Signal received from the strain measurement devices is strong easily distinguishable from noise and other unwanted signals. Data obtained by the measurements is directly applicable for analyzing operation and/or parameters and can be directly provided for use by a control system of plant.

### Brief description of the drawings

In the following the invention will be described in greater detail, in connection with preferred embodiments, with reference to the attached drawings, in which
Figure 1 shows a cross-section of a suction roll.
Figure 2 illustrates schematically a top view of an industrial roller.
Figure 3 illustrates a strain measuring fastening means.
Figure 4 illustrates modules of a data collection and analysis apparatus
Figure 5 shows the measurement setup
Figure 6 illustrates measured forces affecting on an industrial roll
Figure 7 illustrates measured forces in a situation in which movement speed of the felt is changed
Figure 8 illustrates measured forces in a situation in which suction force is applied on a suction roll
Figure 9 illustrates frequency domain view of a measured force
Figure 10 is a spectrogram of signals obtained from a strain measuring bolt
Figure 11 illustrates a ring-shaped strain measurement device and a bolt.
Figure 12A illustrate cross-section of a basic structure of a ring-shaped strain measuring device
Figure 12B illustrates a side view of the ring-shaped stain measuring device.
Figures 13A and 13B illustrate cross section and side view of placement of strain gages at the outer face of an inner ring of the ring-shaped stain measuring device.
Figure 14 shows a Wheatstone bridge configuration.

### Detailed description

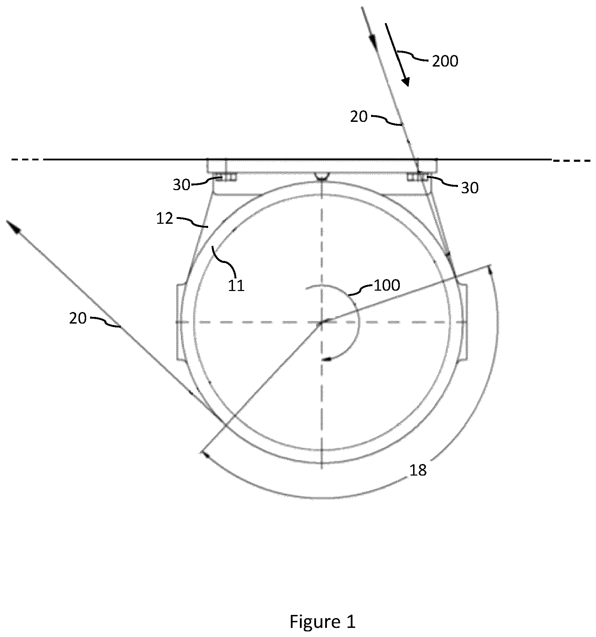

The figure 1 illustrates schematically a cross section of a suction roll, which is an example of an industrial roller. A sectoral contact area (18) between the felt (20) and the roll shell (11) is adjustable based on requirements of the manufacturing process. Support structures (12) arranged at each end of the suction roll are used for coupling the suction roll to a frame. The support structures have journals, and bearings enable a shaft of the suction roll to rotate about the shaft arranged at the central longitudinal axis of the roller. The support structures (12) are fixed to the frame using fastening means (30). Preferably, the fastening means are arranged in a configuration in which the longitudinal axis of the fastening means is perpendicular to the longitudinal axis of the industrial roller.

Before initiating the manufacturing process, the felt (20), which is typically formed as an endless belting, is tensioned in its longitudinal dimension. Tensioning the felt is necessary for enabling the felt to travel smoothly over the roll and/or through a nip of a roller press. A nip is a contact surface between two rolls, and the nip impression causes a line load, also referred to as a knife-edge load, on the felt and the fiber web.

Typical felt tension in the longitudinal dimension is between 2.5 and 4.0 kN/m. For ensuring good quality of the manufactured paper or board, it is important to maintain even tension over the entire width of the felt. Uneven tension of the felt (20) tends to cause faults, such as wrinkles or folds in the fiber web, and thus also on the resulting sheet of paper or board, which cause client reclamations and loss of profits.

Typically, movement (200) of the felt (20) causes the suction roll to rotate (100) about its longitudinal axis. Speed of movement of the felt (20) and thus rotation speed and rotation frequency of the suction roll varies, depending on type and/or phase of the process. For example, in an exemplary test case, speed of movement of the felt may varied between 15 m/min during a cleaning cycle and over 550 m/min during a manufacturing cycle.

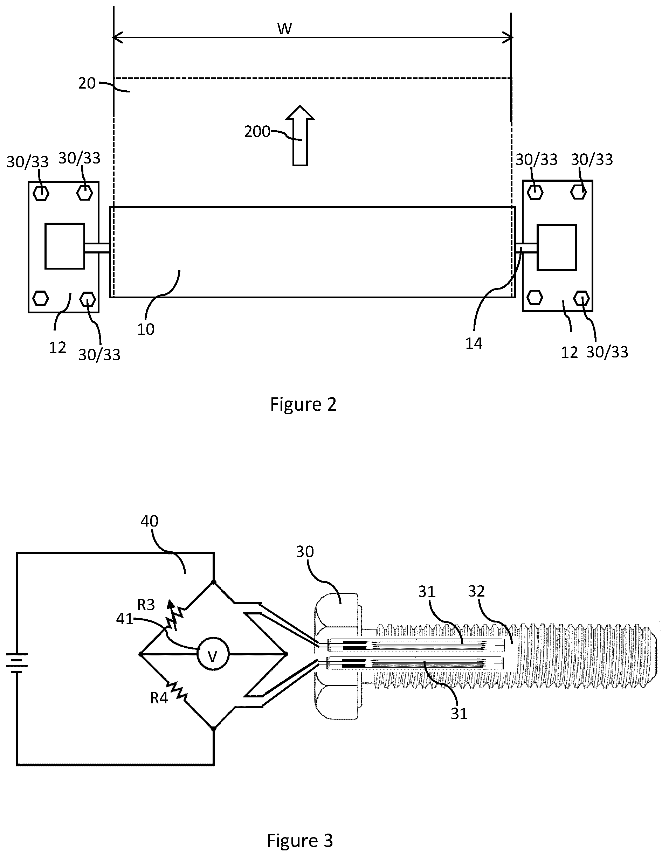

Figure 2 illustrates schematically a top view of an industrial roller (10) having its shaft (14) extending in the longitudinal dimension of the industrial roller (10). The shaft (14) is rotatably attached to the support structures (12), which are in this example fixed to the frame of the machine by a plurality of strain measuring fastening means (30) at each end of the industrial roller (10). A felt (20) moves (200) in direction of its longitudinal dimension about the industrial roller, touching a sectoral contact area of the industrial roller. Width (W) of the felt (20) is typically equal or less than the length of the industrial roller (10). The roller may be excited to rotation by the moving felt (20). One of the ends of the industrial roller may be referred to as the driving side or drive side, and the other may be referred to as the tending side. As commonly referred in the art, the driving side refers to the side of a reel frame where most drives are located, although not every roller is directly driven for example by a motor coupled to its shaft. Tending side refers to the side of the reel frame from which operators typically approach or tend the machine, on the side that does not comprise driving means.

Alternatively, the support structures (12) are fixed to the frame of the paper or board machine by a plurality of common type fastening means (33) at each end of the industrial roller (10), and ring-shaped strain measuring means are attached by the fastening means (33) in washer-like manner such that the ring-shaped strain measuring means is firmly held by a head of the respective fastening means (33) against the support structure (12). This alternative is illustrated by alternative numbering of the fastening means in the figure 2.

Figure 3 illustrates schematically a bolt, which is an example of a strain measuring fastening means (30) according to some examples. Two strain gages (31) are disposed parallel in a longitudinal dimension of the bolt within a hole (32) drilled longitudinally in the bolt. Two strain gages (31) are coupled by wiring to form a half-bridge strain gage configuration, in which voltage V, representing the output signal of the electrical circuitry (40), in this case a bridge circuitry, correlates with the longitudinal strain affecting the bolt and thus the strain gages (31) comprised in it. The strain gages (31) are preferably fixed inside the hole (32) by bonding or gluing. The bridge circuitry comprises two resistors (R3, R4).

According to a first example, each end of the industrial roller is fastened to a frame of the paper or board machine using a plurality of strain measuring fastening means (30). Preferably each fastening means (30) is a strain measuring fastening means (30). The fastening means (30) may be for example bolts and the strain measuring fastening means (30) may be bolts provided with strain gages as illustrated in the Figure 3. Before fastening, the fastening means are preferably lubricated before assembling using a wrench. The fastening means should be tightened with approximately equal torque. After the fastening means (30) have been fastened and tightened, the strain gages thereof are preferably wire-coupled. Wire-coupling after assembly of the fastening means (30) is preferred to avoid problems caused by and to the wires during assembling the fastening means (30). For ensuring proper functioning of the strain gages, it is good to perform a confirmation step by measuring at least one parameter value of the strain gage and checking that this corresponds to a nominal parameter value provided by the manufacturer. For example, when the strain gage is of resistor type, the confirmation measurement can be performed by measuring resistance of each strain gage after assembly and comparing this to the nominal value of the resistance provided by the manufacturer.

After confirming, that the strain gages have correct initial resistance values, strain measuring fastening means are ready to be coupled to a data collection and analysis apparatus (45) comprising an electrical circuitry (40), in this case a bridge circuitry that is in essence a transducer circuitry for converting change in resistance, capacitance or inductance in the plurality of strain gages into a plurality of electrical signals. According to a first example, there are preferably two strain gages in each fastening means, coupled into a half bridge configuration that outputs a voltage signal (41) correlating to longitudinal strain affecting the respective fastening means.

Although voltage signal is most commonly used in connection with strain gages, and these are also described above, the invention is not restricted to using any particular type of output signal. After coupling all strain measuring fastening means (30) to the data collection apparatus, the measurement setting is preferably zeroed by adjusting output voltage of each half bridge initially to zero value. Zeroing should be made when the felt is not tensioned, and, in case the industrial roller is a suction roll, no suction has been activated. Zeroing is optional, and instead of actually zeroing the voltage, displayed output values can be adjusted electronically or programmatically to show a zero value when no tension is in place.

According to a second example, each end of the industrial roller is fastened to a frame of the paper of board machine using a plurality of common fastening means (33), such as bolts, with no strain measurement capabilities. At least two ring-shaped strain measurement devices are assembled with the fastening means in washer-like manner such that the fastening means fixes the respective ring-shaped strain measuring device, holding it firmly towards the support structure by the head of the fastening means. Thus, the strain measurement devices are in mechanical contact with the fastening means, although not comprised in them. Also in this example, each fastening means should be tightened with approximately equal torque. By using bolts, torque can be easily controlled, and ring-shaped strain measurement devices can be changed for example if found to be defective. Further, having strain measurement devices as separate devices from the fastening means avoids risk of damaging the electrical connections during assembly, such that necessary wires for connecting the strain gages to electrical circuitry may be an integral part of the strain measurement device. Like in the first example, also in the second example both sides of the industrial roller preferably have at least two strain measurement devices assembled and operational.

Ring-shaped strain measurement devices are wire-coupled. For ensuring proper functioning of the strain gages, it is good to perform a confirmation step by measuring at least one parameter value of the strain gage and checking that this corresponds to a nominal parameter value provided by the manufacturer. For example, when the strain gage is of resistor type, the confirmation measurement can be performed by measuring resistance of each strain gage after assembly and comparing this to the nominal value of the resistance provided by the manufacturer.

According to the second example, there are at least four strain gages in each ring-shaped strain measuring devices coupled to full bridge configuration that outputs a voltage signal correlating to strain affecting the respective ring-shaped strain measuring device. Although voltage signal is commonly used in connection with strain gages, and these are also described above, the invention is not restricted to using any type of output signal.

In all examples, the system is preferably calibrated for example by performing at least two strain measurements with known strain values. It can be safely assumed that measured strain between two known values follows a linear function.

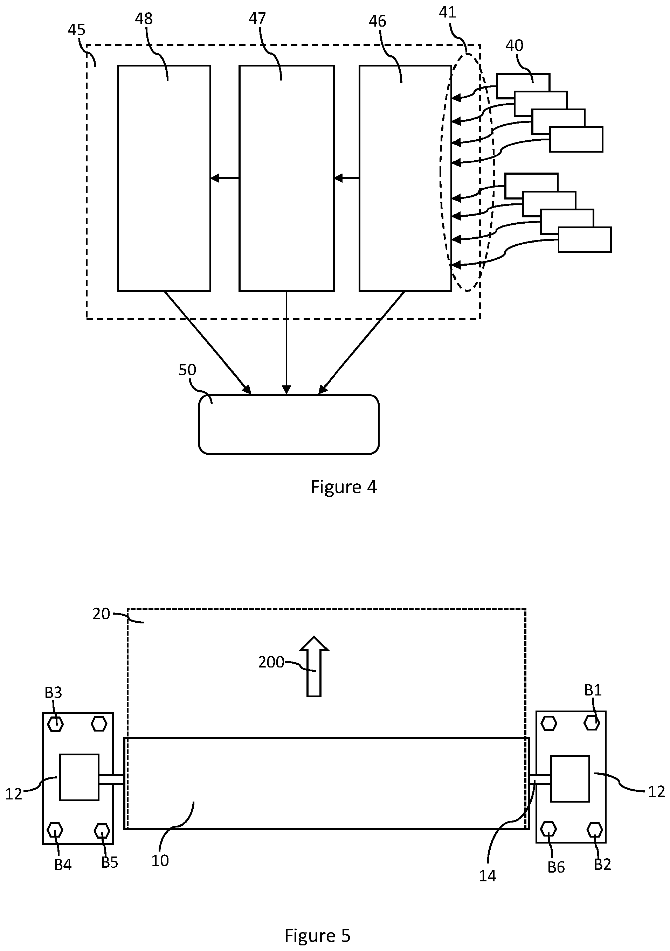

The figure 4 illustrates exemplary modules of the data collection and analysis apparatus (45). Preferably, the data collection and analysis apparatus (45) obtains samples of output signals (41) received from the plurality of electrical circuitries (40). Modules herein refer to functional entities of the data collection apparatus that may comprise hardware, software, firmware or a combination thereof. Output signals (41) correlate to strain (force) affecting each respective strain sensing fastening means. For ensuring sufficient data coverage of the measurements, output signals (41) should be sampled with a sufficient sample rate. In this respect, sufficiency of the sample rate depends on the physical phenomenon that is measured. On the other hand, too high sampling rate would cause increased signal processing load without bringing any significant benefits i.e. by improving measurement accuracy. For enabling determining effects on support reactions caused by operation of an industrial roller and/or a felt, a sample rate that provides at least ten samples per full rotation of the industrial roller has been found to provide good results. Because movement speed of the felt varies for example in dependence of operation mode of the paper or board machine and/or the industrial roller, also the rotation rate of the industrial roll varies. Therefore, the sampling rate is preferably adjustable according to the operation mode of the paper or board machine.

In the following, an example of calculation of a suitable sampling rate fₛ is provided. The felt speed v_{felt} is set to 520 m/minute for achieving a predetermined quality of the end product. If the industrial roller has an outer diameter Dₒᵤₜ=750mm, the angular frequency *ω* of the industrial roller is $ω = \frac{2 ∗ vfelt}{Dout} = \frac{2 ∗ 520 m}{60 s ∗ 0.75 m} = 23.11 1 / s$ and the rotation frequency fᵣ is $fr = \frac{ω}{2 π} = \frac{23.11}{2 π} = 3.68 Hz$

Thus, the sampling rate fₛ should be at least 36.8 Hz. A sampling rate at or in the range of 40.0 Hz to 50.0 Hz can be selected for this movement speed of the felt, fulfilling the minimum criterion of at least 10 measurements per full rotation.

The exemplary measurement apparatus comprises a sampling module (46) that obtains samples of output signals (41) of the electrical circuitries (40). Sampling may be implemented for example by one or more analog-to-digital converters. Obtained samples are then processed by a support reaction determining module (47) that determines support reactions of the industrial roller based on the sampled data. One or more operation estimation modules (48) may be provided estimate operation of the industrial roller and/or the felt based on said support reactions. An operation estimation module (48) may identify problems in operation and provide alerts or alarms to a human operator by means of a user interface and/or provide control signals for controlling operation of the industrial roller. Preferably the measurement apparatus is provided by or coupled to a user interface (50) that is configured to display information provided by any of the modules (46, 47, 48) to the human operator, as well as displaying any alerts or alarms. Furthermore, results of determined operation estimation may be provided via one or more signals to a control system of the paper or board machine, which can utilize received information for automatically adjusting and optimizing various related operation parameters of the paper or board machine based on the received information.

In the following figures 5 to 10, some examples of support reactions measured with a test setup are illustrated.

The figure 5 shows the measurement setup used in the following exemplary test measurements performed using strain measuring fastening means. Six strain measuring fastening means (B1, B2, B3, B4, B5, B6), implemented as strain measuring bolts were used for measurement, three on each end of the industrial roller, and one of the fastening means used for fastening each support structure (12) was a standard bolt without strain detecting capability. Strain measuring bolts B1 and B3 were on the side of the shaft (14) that was towards the direction of movement of the felt (20), while four strain measuring bolts (B2, B4, B5, B6) were on the side of the shaft that is away from the direction of movement of the felt (20). Strain measuring bolts B1, B2, B6 were on the driving side, and strain measuring bolts B3, B4, and B5 were on the tending side.

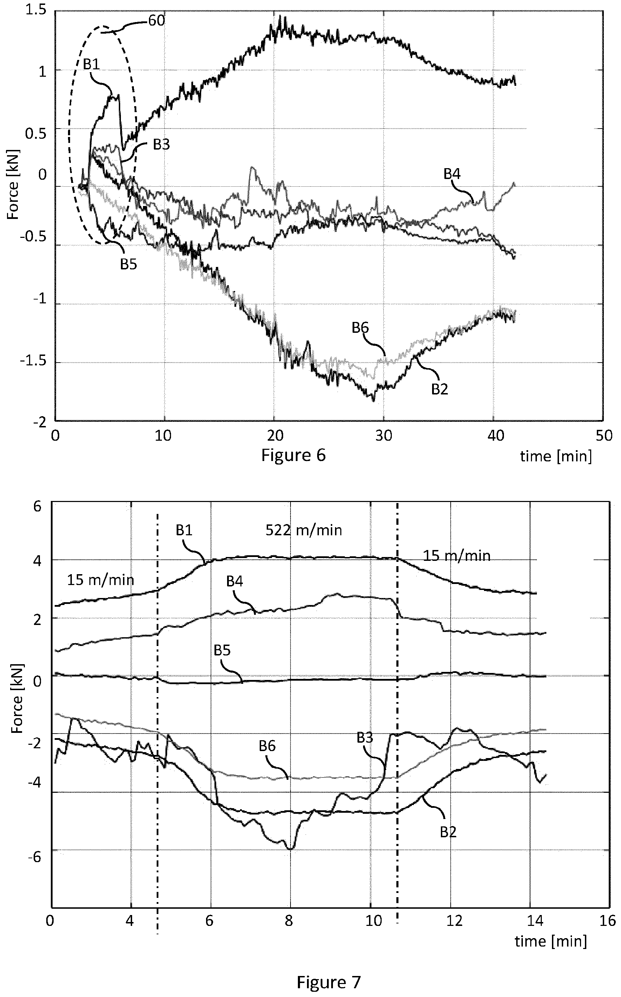

The figure 6 illustrates measured forces affecting on an exemplary industrial roll measured with six strain measuring fastening means, here referred in short as the strain measuring bolts (B1, B2, B3, B4, B5, B6). The first example shown in this figure represents tensioning the felt from 0 kN/m to about 3.5 kN/m in the early part of the measurements (60). In the driving side, there is clear increase in force measured with the strain measuring bolt B1, while forces affecting strain measuring bolts B2 and B6 on the driving side decrease. Changes in forces on the tending side are clearly smaller, but for example increase in force affecting the strain measuring bolt B3 on the same side of the shaft with respect to the felt as the strain measuring bolt B1 is also visible. A difference between support reactions measured on driving side and tending side may indicate for example uneven distribution of tension of the felt in the longitudinal dimension of the industrial roller, which corresponds to the lateral dimension (width) of the felt. Thus, based on detecting differing support reactions measured by different strain measuring bolts, it may be estimated that felt is not evenly tensioned over the longitudinal dimension of the roller and tensioning of the felt may need to be adjusted.

Like measurements can be performed using ring-shaped strain measurement devices or other strain measurement devices which are in mechanical contact with the fastening means, with the addition that these can further provide additional information through being able to measure strain not only parallel to the longitudinal axis of the fastening means (33) but also in the transversal direction.

The figure 7 illustrates measured forces in a situation in which movement speed of the felt is increased into a higher speed 522 m/min at about 4.5 minutes and then decreased back to the original, lower speed 15 m/min after 10 minutes. Clear increase in forces acting on the strain measuring bolts B1, B2, B4 and B6 are shown. The strain measuring bolt B3 behaves in a peculiar way, which may be indication of a problem either in the roller, in the fastening or in the bolt itself. This kind of unexpected measurement results by one or more strain measuring bolts can be easily recognized automatically by the support determining module and/or the operation estimation module and/or visually from the measurement results displayed in the user interface, indicating a need to investigate the operation of the paper or board machine further.

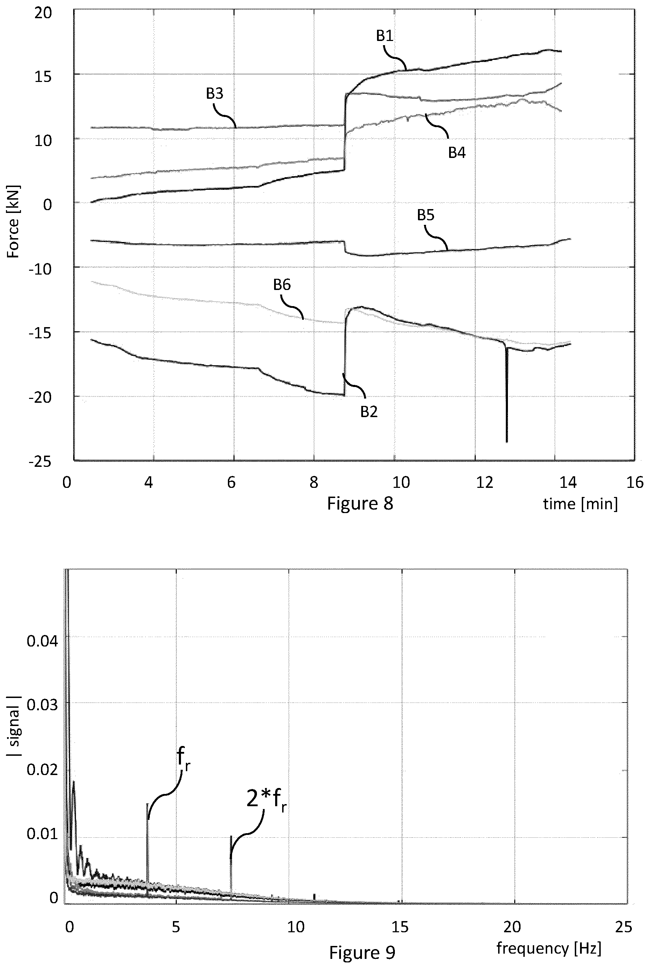

The figure 8 illustrates a situation in which suction force is applied and picks up between 8 and 9 minutes of the plotted measurement data. A clearly distinguishable change caused by the suction force is seen in forces affecting each of the strain measuring bolts at the time of pick up. Any unexpected change in one or more of the signals in comparison to results of measurement in a normal case may indicate need for further investigation and adjustment of operation of the machine. The operation estimation module may be taught to recognize any abnormal measurement results by providing a number of normal measurement results. Any significant deviation from the learned reference measurement signals may represent an issue that needs operator attention. Thus, a deviation from reference can be used for initiating an alarm, alert and/or automatic adjustment of the operation of one or more parts of the paper or board machine.

The figure 9 shows a snapshot in frequency domain view of the measurement shown in the figure 8 after pick-up of the suction force. This presentation can be achieved by making a fast Fourier transform (FFT) to the data samples. The FFT can be made by the support reaction determining module or the operation estimation module. Rotation frequency fᵣ of the roll is clearly visible in the signals, as well as a first harmonic frequency thereof, 2*fᵣ.

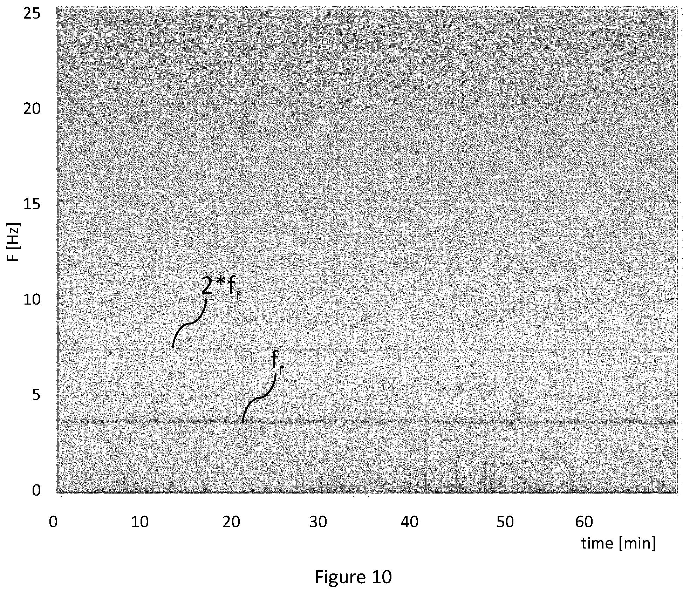

The figure 10 illustrates a spectrogram of one strain measuring bolt, showing a steady frequency component (fᵣ) at the rotation frequency of the industrial roller and a weaker, likely steady frequency component (2*fr) that represents a first harmonic frequency of the rotation frequency. By tracking frequency content of the output signal of one or more bolts over time, it can be determined whether a change in an operation setting causes any unwanted change in the rotation frequency of the industrial roller or the rotation speed changes over time.

In some occasions, it is preferable to perform strain measurements at or near bearings of the industrial roller. This can be achieved using an alternative implementation.

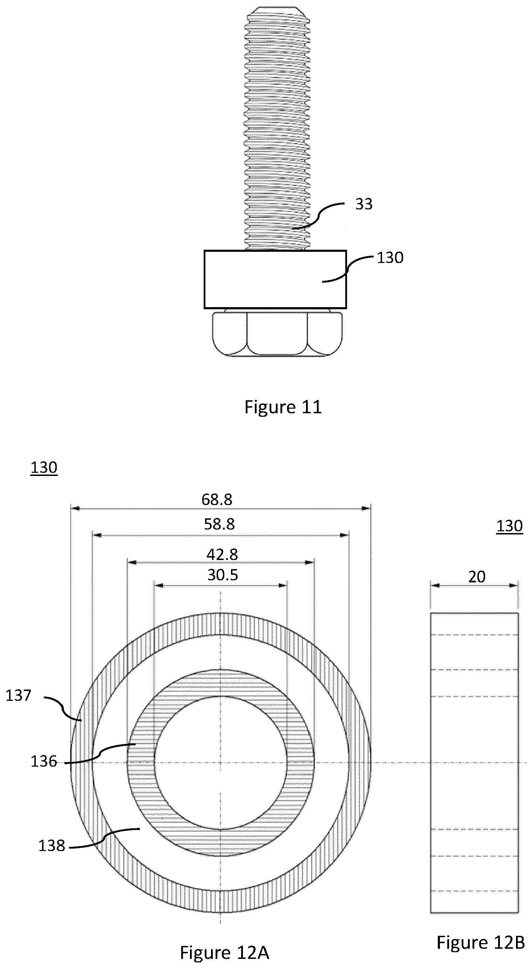

According to the preferred embodiment, ring-shaped strain measuring devices (130) are provided that are separate from the actual fastening means used for fastening the support structure of the industrial roll to the frame but designed to be in mechanical contact with the fastening means by being fixed by fastening means in a washer-like manner, as illustrated in the figure 11. Thus, the ring-shaped strain measuring devices are in mechanical contact with the fastening means when assembled and when in use. When assembled and in use, the ring-shaped strain measuring device is held firmly in place against the support structure by the head of the fastening means (33), while the stem of the fastening means passes through the central hole of the inner ring. This assembly method ensures that strain measured by the ring-shaped strain measuring device has high correlation with strain affecting the fastening means and provides reliable measurements for determining support reactions of the industrial roller.

When ring-shaped strain measuring devices are applied for strain measurement of the industrial roll, at least two ring-shaped strain measuring devices (130) are preferably assembled both on the driving side and on the tending side of the industrial roller. When bolts are used as fastening means, assembly of the ring-shaped strain measuring devices (130) can be temporary and removable but also serves in more permanent assemblies for long periods of time. Any malfunctioning ring-shaped strain measurement device (130) can be easily replaced for example during a normal, scheduled maintenance period of the paper or board machine.

The figure 12A illustrates cross-section of the basic structure of a ring-shaped strain measuring device (130). The figure 12B illustrates a side view of the ring-shaped stain measuring device (130). The ring-shaped strain measuring device (130) preferably comprises an inner ring (136) made of metal, such as steel, an outer ring (137) preferably made of a synthetic polymer composed of polyamide, i.e. nylon. Width of the inner ring (136) is preferably even. Thickness of the inner ring (136) is preferably even. The inner diameter of the inner ring (136) should be slightly greater than the outer diameter of the shank and/or thread of the bolt to enable ease of assembly the strain measuring device and a good mechanical contact, while avoiding harming the inner ring (136) or the fastening means (33) in any way during assembly. Preferably, a bolt is selected that has a shank without threads at the area on which the ring-shaped strain measurement device (130) is assembled. Preferably, inner diameter of the inner ring (136) is approximately 0.5 mm greater than outer diameter of the shank and/or thread of the fastening means (33), such as a bolt. The outer ring (137) protects the inner ring and the strain gages from mechanical stress, impacts as well as from various chemicals in the environment. The space between the inner ring (136) and the outer ring (137) has a filling (138) comprising or consisting of elastic mass, such as polyurethane resin suitable for electrical applications. An example of such elastic mass is SikaBiresin^{®} RE560-93 by Sika Industry. The filling (138) keeps the outer ring from becoming into contact with the inner ring and the strain gages (31) on its outer face and also protects the strain gages (31) from chemical exposure from the environment which might affect operation thereof. The inner ring (136) is preferably made of the same steel as the fastening means (33) to avoid uneven wear of either and to make the mechanical contact robust and durable. For example, if the fastening means (33) is a bolt made of acid resistant A4 steel, the inner ring is also preferably made of A4 steel. Yield point of the inner ring shall be equal or higher than that of the fastening means. Strain gages and electrical wiring is omitted from the figures 12A and 12B for clarity. The illustrates ring-shape is preferably further covered by a cover structure (not shown), which may be for example any suitable plastic, such as polypropene or polyamide. The cover structure should not, however, cover the inner face of the inner ring (136), because cover material would affect mechanical contact between the bolt and the inner ring (136) and thus measurement results, and wear of the cover material, which is preferably softer than the inner ring would cause errors in the measurement results. The cover structure may also be at least partially omitted from the side faces of the inner ring for the same reason to ensure good mechanical contact between the fastening means and the strain measuring device. The cover structure further protects the ring-shaped strain measuring device's elements from the environment, and it can be utilized as a mold during manufacturing of the ring-shaped strain detecting device, in particular during adding the filling (138), which may be added in liquid state.

Figures 12A and 12B further illustrate exemplary dimensions of the main structural elements of the ring-shaped strain measuring device (130), in millimeters, when designed for use with a M30 bolt. The exemplary design can be used also with thinner bolts, from M30 to M10, as long as head of the bolt is big enough to fix the ring-shaped strain measuring device (130) reliably against the support structure, or dimensions may be specifically designed to any wanted bolt size. As understood by a skilled person, dimensions will be varied to obtain a ring-shaped strain measuring device suitable for different sized fastening means.

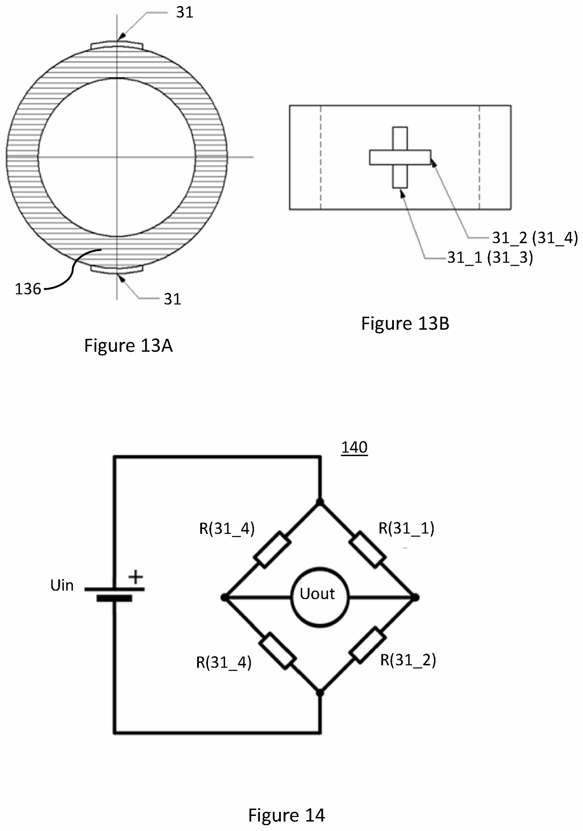

Figures 13A and 13B illustrate placement of strain gages (31) at the outer face of the inner ring (136). Figure 13A shows a cross-section and figure 13B shows a side view. Preferably, two strain gages (31) are disposed on two opposite sides on the outer circumference of the inner ring (136) such that on each side the two strain gages have a 90-degree orientation difference as shown in the figure 13A, thus forming a "cross". Preferably, alignments of strain gages (31) are such that when installed, two of the strain gages (31_1, 31_3) are parallel with longitudinal dimension of the fastening means, and two of the strain gages (31_2, 31_4) are perpendicular to the longitudinal dimension of the fastening means. Strain gages (31) may be attached to the inner ring in any known manner, for example by bonding. Four strain gages (31) of the ring-shaped strain measuring device (130) are preferably coupled into a full bridge configuration. Ring-shaped strain measurement devices are coupled via the bridge circuitries to the sampling module to obtain samples of electrical signals provided by said bridge circuitries. Wiring is not shown in the figures 13A and 13B for clarity. Wiring may travel through the filling (138), the outer ring (137) and/or the additional cover structure of the ring-shaped strain measuring device.

Preferably, each strain gage (31) is between 2.5mm and 5 mm long and a 350 Ω nominal resistance. However, different values can be applied. The given, exemplary values are particularly suitable for the device shown in the figures 12A and 12B, but different strain gages (31) may be preferred for a different size ring-shaped strain measuring device (130).

Assembly of the ring-shaped strain measuring devices (130) is simple. Typically, bolts will be tightened to about 90% of their allowed yield point to ensure sufficient tightness. Proper tightening of the bolts improves endurance of bolts and prevents fatigue of bolts.

After assembly, the strain gages are preferably calibrated using known loading. Just two calibration load values are typically sufficient, especially when strain gages and the sensor device can be considered to behave linearly between these calibration load values. More accurate calibration may be achieved by using more than two calibration load values. For example, use of four or five calibration load values provide a highly accurate calibration result, if the function would not be fully linear.

Four strain gages (31) of the ring-like strain measurement device (130) are preferably coupled into a full bridge circuitry (140). When the full bridge circuitry (140) is a Wheatstone bridge as shown in the figure 14, transfer function of the bridge can be expressed as: ${U}_{out} = k / 4 * \left({ε}_{1}+0.3*{ε}_{2}+{ε}_{3}+0.3*{ε}_{4}\right) * {U}_{in} ,$

Where Uₒᵤₜ is the output voltage, Uᵢₙ is the input voltage, k is the gage factor and ε refers to strain measured by one of the four strain gages. Subscripts 1 to 4 indicate identity of the respective strain gages (31_1, 31_2, 31_3 and 31_4) in the figure 13B and in the figure 14.

The bridge coefficient is thus 2.6, which is doubled in comparison to the bridge coefficient of the half-bridge coupled strain measuring fastening means.

Instead of a half bridge circuitry discussed in connection with the first example or the full bridge circuitry (140) discussed in connection to the second example, any other suitable electrical circuitry can be used for providing electrical signals from strain measuring devices, as known by a skilled person. To provide a most robust strain measurement device, only strain gages and connecting wiring thereof are integrated electrical parts of the physical strain measurement device, preferably with appropriate connectors to facilitate easy coupling to rest of the electrical circuitry, and any other electrical circuitry elements are connected to the strain gages by the provided wiring and connectors.

In addition to the two specific technical implementations disclosed above, the same basic idea can be implemented using some alternative types or shapes of strain measuring devices, as long as these, either directly or indirectly, measure strain affecting fastening means used for fastening the support structure of the industrial roll to a frame of the machine, which enables determining support reactions of the industrial roller according to the invention.

It is apparent to a person skilled in the art that as technology advanced, the basic idea of the invention can be implemented in various ways. The invention and its embodiments are therefore not restricted to the above examples, but they may vary within the scope of the claims.

According to some examples, method for estimating operation of an industrial roller and/or a felt of a board or paper machine is provided. The industrial roller is supported to a frame of the board or paper machine by support structures assembled at each end of the industrial roller and provided with bearings, and wherein the industrial roller is rotated about its rotation axis, aligned with the longitudinal axis of the industrial roller, by movement of the felt contacting a sectoral contact area on the outer surface of the industrial roller. The method comprises fastening the support structures to the frame by a plurality of strain measuring fastening means. Each strain measuring fastening means comprises at least two strain gages configured to measure longitudinal strain affecting the strain measuring fastening means, and connections of the at least two strain gages to a bridge circuitry for providing an electrical signal. The method comprises obtaining samples of electrical signals provided by said bridge circuitries, the electrical signals representing longitudinal strain on each of the plurality of strain measuring fastening means during operation of the paper or board machine. The method comprises determining support reactions of the industrial roller on basis of said samples and estimating operation of the industrial roller and/or the felt based on said determined support reactions.

Longitudinal axes of said strain measuring fastening means are perpendicular to the rotation axis of the industrial roller.

According to some examples, two strain gages are disposed parallel in a longitudinal dimension of the strain measuring fastening means within a hole drilled longitudinally in the strain measuring fastening means and wherein said two strain gages are coupled to form a half-bridge strain gage configuration.

According to some examples, said at least two strain gages are fixed within the strain measuring fastening means by gluing.

According to some examples, an apparatus for estimating operation of an industrial roller and/or a felt of a board or paper machine is provided. The industrial roller is supported to a frame of the board or paper machine by support structures assembled at each end of the industrial roller and provided with bearings, and wherein the industrial roller is rotated about its rotation axis, aligned with the longitudinal axis of the industrial roller, by movement of the felt contacting a sectoral contact area on the outer surface of the industrial roller. The apparatus comprises a plurality of strain measuring fastening means fastening the support structures to the frame. Each strain measuring fastening means comprises at least two strain gages configured to measure longitudinal strain on the strain measuring fastening means, and connections of the at least two strain gages to an electrical bridge circuitry for providing an electrical signal. The apparatus comprises a sampling module configured to obtain samples of electrical signals provided by said electrical bridge circuitries, the electrical signals representing longitudinal strain on each of the plurality of strain measuring fastening means during operation of the paper or board machine. The apparatus comprises a support reaction determining module configured to determine support reactions of the industrial roller on basis of said samples, and at least one operation estimation module configured to estimate operation of the industrial roller and/or the felt based on said support reactions.

According to some examples, longitudinal axes of said strain measuring fastening means are perpendicular to the rotation axis of the industrial roller.

According to some examples, each strain measuring fastening means comprises two strain gages disposed parallel in a longitudinal dimension of the strain measuring fastening means within a hole drilled longitudinally in the strain measuring fastening means, and wherein said two strain gages are coupled to form a half-bridge strain gage configuration.

According to some examples, said at least two strain gages are fixed within the strain measuring fastening means by gluing.

## Claims

1. A ring-shaped strain measuring device (130) comprising:
- an inner ring (136) made of metal,
- an outer ring (137) made of a synthetic polymer, and
- a filling (138) within the space between the inner ring (136) and the outer ring (137), wherein the filling comprises elastic material, such as polyurethane resin,
- four strain gages (31) fixed on the outer face of the inner ring (136) and configured to measure strain, and
- electrical connections of the four strain gages to form a bridge circuitry for providing an electrical signal.

2. The ring-shaped strain measuring device (130) according to claim 1, wherein the four strain gages (31) are fixed on the outer face of the inner ring (136) by bonding.

3. The ring-shaped strain measuring device (130) according to claim 2, wherein the four strain gages (31) are arranged pairwise (31_1, 31_2; 31_3, 31_4) on two opposite sides of the inner ring (136).

4. The ring-shaped strain measuring device (130) according to claim 2 or 3, wherein each pair of strain gages (31_1, 31_2; 31_3, 31_4) is arranged in a cross-like arrangement with 90-degree orientation difference.

5. The ring-shaped strain measuring device according to any one of claims 2 to 4, wherein, when the ring-shaped strain measuring means is assembled for use, two of the strain gages (31_1, 31_3) are parallel with longitudinal dimension of a fastening means (33) fastening the ring-shaped strain measuring means (130), and two of the strain gages (31_2, 31_4) are perpendicular to the longitudinal dimension of the fastening means (33).

6. The ring-shaped strain measuring device (130) according to any one of the preceding claims, wherein the metal is steel.

7. The ring-shaped strain measuring device (130) according to any one of the preceding claims, wherein the synthetic polymer is composed of polyamide, such as nylon.

8. The ring-shaped strain measuring device (130) according to any one of the preceding claims, wherein the space between the inner ring (136) and the outer ring (137) has a filling (138) comprising or consisting of elastic mass, such as polyurethane resin suitable for electrical applications.

9. The ring-shaped strain measuring device (130) according to any one of the preceding claims, wherein width of the inner ring (136) is even and/or thickness of the inner ring (136) is even.

10. The ring-shaped strain measuring device (130) according to any one of the preceding claims, wherein the ring-shape is partially covered by a cover structure made of any suitable plastic, such as polypropene or polyamide, and wherein the cover structure does not cover the inner face of the inner ring (136).

11. The ring-shaped strain measuring device (130) according to claim 10, wherein the cover structure is at least partially omitted from the side faces of the inner ring (136).

12. The ring-shaped strain measuring device (130) according to claim 10 or 11, wherein the cover structure is configured to be utilized as a mold during manufacturing of the ring-shaped strain detecting device (130).

13. An apparatus comprising the ring-shaped measuring device (130) of any one of the preceding claims, further comprising a fastening means (33), such as a bolt, configured to fasten the ring-shaped measuring device (130) in a washer-like manner, the fastening means (33) comprising a shank and/or thread, wherein an inner diameter of the inner ring (136) is approximately 0.5 mm greater than the outer diameter of a shank and/or thread of the fastening means (33).

14. The apparatus according to claim 13, wherein the inner ring (136) is made of the same steel as the fastening means (33), wherein the steel is preferably acid resistant A4 steel.

15. The apparatus according to any one of claims 13 or 14, wherein a yield point of the inner ring (136) is equal or higher than a yield point of the fastening means (33).

## Patentansprüche

1. Ringförmige Dehnungsmessvorrichtung (130) umfassend:
- einen Innenring (136) aus Metall,
- einen Außenring (137) aus einem synthetischen Polymer, und
- eine Füllung (138) im Raum zwischen dem Innenring (136) und dem Außenring (137), wobei die Füllung ein elastisches Material wie Polyurethanharz umfasst,
- vier an der Außenfläche des Innenrings (136) befestigte und zur Messung der Dehnung ausgelegte Dehnungsmessstreifen (31), und
- elektrische Verbindungen der vier Dehnungsmessstreifen zur Ausbildung einer Brückenschaltung zum Bereitstellen eines elektrischen Signals.

2. Ringförmige Dehnungsmessvorrichtung (130) nach Anspruch 1, wobei die vier Dehnungsmessstreifen (31) durch Verkleben an der Außenfläche des Innenrings (136) befestigt sind.

3. Ringförmige Dehnungsmessvorrichtung (130) nach Anspruch 2, wobei die vier Dehnungsmessstreifen (31) paarweise (31_1, 31_2; 31_3, 31_4) an zwei gegenüberliegenden Seiten des Innenrings (136) angeordnet sind.

4. Ringförmige Dehnungsmessvorrichtung (130) nach Anspruch 2 oder 3, wobei jedes Paar von Dehnungsmessstreifen (31_1, 31_2; 31_3, 31_4) in kreuzweiser Anordnung mit einer Ausrichtungsdifferenz von 90 Grad angeordnet ist.

5. Ringförmige Dehnungsmessvorrichtung nach einer der Ansprüche 2 bis 4, wobei wenn das ringförmige Dehnungsmessmittel zur Verwendung montiert ist, zwei der Dehnungsmessstreifen (31_1, 31_3) parallel zur Längsdimension eines das ringförmige Dehnungsmessmittel (130) befestigenden Befestigungsmittels (33) sind, und zwei der Dehnungsmessstreifen (31_2, 31_4) rechtwinklig zur Längsdimension des Befestigungsmittels (33) sind.

6. Ringförmige Dehnungsmessvorrichtung (130) nach einem der vorhergehenden Ansprüche, wobei es sich bei dem Metall um Stahl handelt.

7. Ringförmige Dehnungsmessvorrichtung (130) nach einem der vorhergehenden Ansprüche, wobei das synthetische Polymer aus Polyamid wie Nylon besteht.

8. Ringförmige Dehnungsmessvorrichtung (130) nach einem der vorhergehenden Ansprüche, wobei der Raum zwischen dem Innenring (136) und dem Außenring (137) eine Füllung (138) aufweist, die eine elastische Masse, wie ein für elektrische Anwendungen geeignetes Polyurethanharz, umfasst oder aus einer solchen besteht.

9. Ringförmige Dehnungsmessvorrichtung (130) nach einem der vorhergehenden Ansprüche, wobei die Breite des Innenrings (136) gleichmäßig ist und/oder die Dicke des Innenrings (136) gleichmäßig ist.

10. Ringförmige Dehnungsmessvorrichtung (130) nach einem der vorhergehenden Ansprüche, wobei die Ringform von einer Abdeckstruktur aus einem geeigneten Kunststoff, wie Polypropylen oder Polyamid, teilweise abgedeckt ist, und wobei die Abdeckstruktur die Innenfläche des Innenrings (136) nicht abdeckt.

11. Ringförmige Dehnungsmessvorrichtung (130) nach Anspruch 10, wobei die Abdeckstruktur an den Seitenflächen des Innenrings (136) mindestens teilweise weggelassen ist.

12. Ringförmige Dehnungsmessvorrichtung (130) nach Anspruch 10 oder 11, wobei die Abdeckstruktur dazu ausgelegt ist, während der Herstellung der ringförmigen Dehnungsmessvorrichtung (130) als Formwerkzeug genutzt zu werden.

13. Einrichtung, die die ringförmige Messvorrichtung (130) nach einem der vorhergehenden Ansprüche umfasst, ferner umfassend ein Befestigungsmittel (33), wie eine Schraube, das dazu ausgelegt ist, die ringförmige Messvorrichtung (130) nach Art einer Unterlegscheibe zu befestigen, wobei das Befestigungsmittel (33) einen Schaft und/oder ein Gewinde umfasst, wobei der Innendurchmesser des Innenrings (136) etwa 0,5 mm größer ist als der Außendurchmesser eines Schafts und/oder Gewindes des Befestigungsmittels (33).

14. Einrichtung nach Anspruch 13, wobei der Innenring (136) aus dem gleichen Stahl wie das Befestigungsmittel (33) gefertigt ist, wobei es sich bei dem Stahl vorzugsweise um säurebeständigen A4-Stahl handelt.

15. Einrichtung nach einem der Ansprüche 13 oder 14, wobei die Fließgrenze des Innenrings (136) gleich oder größer als die Fließgrenze des Befestigungsmittels (33) ist.

## Revendications

1. Dispositif extensométrique annulaire (130) comprenant :
- un anneau intérieur (136) fait en métal,
- un anneau extérieur (137) fait d'un polymère synthétique, et
- un remplissage (138) dans espace entre l'anneau intérieur (136) et l'anneau extérieur (137), ledit remplissage comprenant un matériau élastique tel que la résine polyuréthane,
- quatre jauges extensométriques (31) fixées à la face extérieure de l'anneau intérieur (136) et configurées pour mesurer l'allongement, et
- des connexions électriques des quatre jauges extensométriques pour former un circuit en pont pour fournir un signal électrique.

2. Dispositif extensométrique annulaire (130) selon la revendication 1, dans lequel les quatre jauges extensométriques (31) sont fixées par collage à la surface extérieure de l'anneau intérieur (136).

3. Dispositif extensométrique annulaire (130) selon la revendication 2, dans lequel les quatre jauges extensométriques (31) sont disposées par paires (31_1, 31_2 ; 31_3, 31_4) sur deux côtés opposés de l'anneau intérieur (136).

4. Dispositif extensométrique annulaire (130) selon la revendication 2 ou 3, dans lequel chaque paire de jauges extensométriques (31_1, 31_2 ; 31_3, 31_4) est disposée en forme de croix avec une différence d'orientation de 90 degrés.

5. Dispositif extensométrique annulaire selon l'une des revendications 2 à 4, dans lequel, lorsque le moyen extensométrique annulaire est monté pour l'utilisation, deux des jauges extensométriques (31_1, 31_3) sont parallèles à la dimension longitudinale d'un moyen de fixation (33) fixant le dispositif moyen extensométrique annulaire (130), et deux des jauges extensométriques (31_2, 31_4) sont perpendiculaires à la dimension longitudinale du moyen de fixation (33).

6. Dispositif extensométrique annulaire (130) selon l'une des revendications précédentes, dans lequel le métal est l'acier.

7. Dispositif extensométrique annulaire (130) selon l'une des revendications précédentes, dans lequel le polymère synthétique est constitué d'un polyamide tel que le nylon.

8. Dispositif extensométrique annulaire (130) selon l'une des revendications précédentes, dans lequel l'espace entre l'anneau intérieur (136) et l'anneau extérieur (137) a un remplissage (138) comprenant ou constitué d'une masse élastique, tel qu'une résine polyuréthane appropriée pour les applications électriques.

9. Dispositif extensométrique annulaire (130) selon l'une des revendications précédentes, dans lequel la largeur de l'anneau intérieur (136) est uniforme et/ou l'épaisseur de l'anneau intérieur (136) est uniforme.

10. Dispositif extensométrique annulaire (130) selon l'une des revendications précédentes, dans lequel la forme annulaire est partiellement recouverte d'une structure de recouvrement réalisée en un plastique approprié, tel que le polypropène ou le polyamide, et dans lequel la structure de recouvrement ne recouvre pas la face intérieure de l'anneau intérieur (136).

11. Dispositif extensométrique annulaire (130) selon la revendication 10, dans lequel la structure de recouvrement est au moins partiellement omise sur les faces latérales de l'anneau intérieur (136).

12. Dispositif extensométrique annulaire (130) selon la revendication 10 ou 11, dans lequel la structure de recouvrement est configurée pour servir de moule pendant la fabrication du dispositif extensométrique annulaire (130).

13. Appareil comprenant le dispositif de mesure annulaire (130) selon l'une des revendications précédentes, comprenant également un moyen de fixation (33), tel qu'une vis, configuré pour fixer le dispositif de mesure annulaire (130) à la manière d'une rondelle, le moyen de fixation (33) comportant une tige et/ou un filetage, dans lequel le diamètre intérieur de l'anneau intérieur (136) est supérieur d'environ 0,5 mm au diamètre extérieur d'une tige et/ou d'un filetage du moyen de fixation (33).

14. Appareil selon la revendication 13, dans lequel l'anneau intérieur (136) est réalisé dans le même acier que le moyen de fixation (33), l'acier étant de préférence un acier A4 résistant aux acides.

15. Appareil selon l'une des revendications 13 ou 14, dans lequel la limite d'écoulement de l'anneau intérieur (136) est égale ou supérieure à la limite d'écoulement du moyen de fixation (33).
